# EUROPEAN PATENT SPECIFICATION

(11) **EP 4 606 661 B1**
(45) Date of publication and mention of the grant of the patent: **16.09.2026**
(21) Application number: 25158702.8
(22) Date of filing: 18.02.2025
(51) Int. Cl.: B60T 13/66, B60T 13/68, B60T 7/20, B60T 8/17

(54) **HYDRAULIC BRAKING ARRANGEMENT FOR WORK VEHICLES AND RELATED CONTROL METHOD**
HYDRAULISCHE BREMSANORDNUNG FÜR ARBEITSFAHRZEUGE UND ZUGEHÖRIGES STEUERUNGSVERFAHREN
AGENCEMENT DE FREINAGE HYDRAULIQUE POUR VÉHICULES DE TRAVAIL ET PROCÉDÉ DE COMMANDE ASSOCIÉ

(30) Priority: 21.02.2024 IT 202400003646
(43) Date of publication of application: 27.08.2025
(73) Proprietor: CNH Industrial Italia S.p.A., 10156 Torino (IT)
(72) Inventor: Crea, Domenico, 10156 Turin (IT); Lucente, Aldo, 10156 Turin (IT); Ciarrocchi, Pietro Marco, 10156 Turin (IT)
(74) Representative: CNH Industrial IP Department

(56) References cited:
- EP-B1- 1 800 983
- EP-B1- 3 632 755
- US-A1- 2023 415 713

## Description

### TECHNICAL FIELD

The present invention concerns a hydraulic brake arrangement for work vehicles.

The present invention finds its preferred, although not exclusive, application in trailer brake arrangements, in particular for agricultural field. Reference will be made to this application by way of example below.

### BACKGROUND OF THE INVENTION

Agricultural vehicles such as tractors are provided with trailers that could need to be braked. Accordingly, it is known to provide hydraulic arrangements that allow braking of the trailer via tractor hydraulic braking system.

Each country usually developed a specific regulation with respect to the control of the trailer brake arrangement. In Italy, for instance, trailer brake system should respect the requirements of the so-called CUNA regulation.

In particular, such trailer brake arrangements usually comprise a single line that was designed to be controlled to a specific pressure value.

EP 1 800 983 B1 discloses a hydraulic braking system control device that has an electronic control unit receiving information relative to the type of braking system and brake information, and controlling electro-valves based on this information.

US 2023/415713 A1 discloses a method for controlling a braking system of e.g. semi-trailer which involves selecting braking strategy depending on control result and sensor signal by indicating that braking system of vehicle is activated.

In order to harmonize the regulations within European Union and to increase safety in agricultural field, the so-called "Mother Regulation" has been issued. In the near future, it would no more possible to provide hydraulic arrangements that are solely voted to control a trailer realized according to CUNA regulation.

Therefore, it is requested to provide adaptations or to modify existing trailer brake circuits to allow the coupling of trailers that are realized according to Mother Regulation requirements or to CUNA requirements.

An aim of the present invention is to satisfy the above-mentioned needs in a cost-effective and optimized manner.

### SUMMARY OF THE INVENTION

The aforementioned aim is reached by a hydraulic arrangement, a tractor and a tractor-trailer assembly and a related control method as claimed in the appended set of claims.

### BRIEF DESCRIPTION OF DRAWINGS

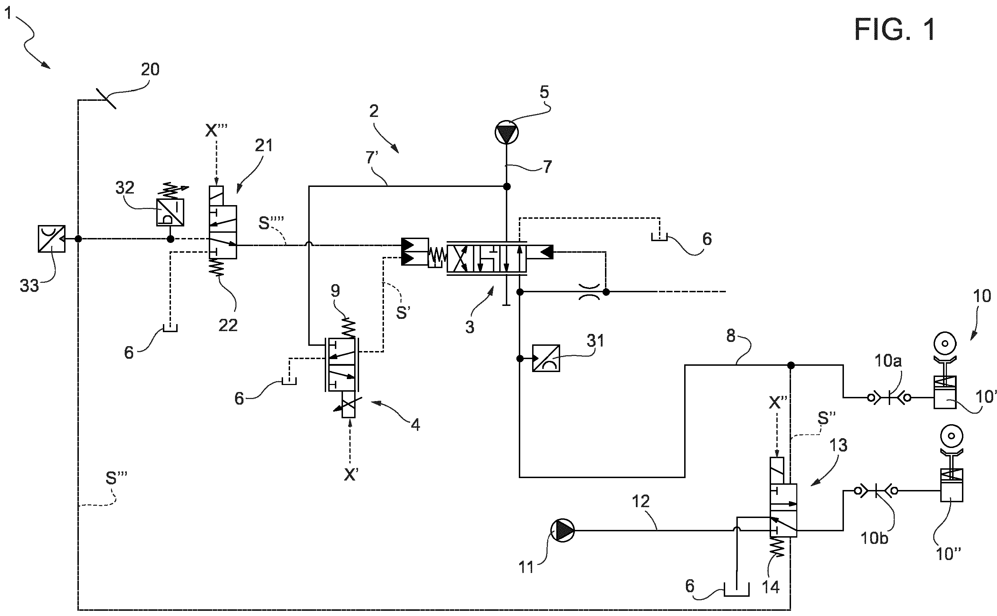

For a better understanding of the present invention, a preferred embodiment is described in the following, by way of a non-limiting example, with reference to the attached drawings wherein the only figure 1 is a schematic showing a hydraulic arrangement according to the invention.

### DETAILED DESCRIPTION OF THE INVENTION

The attached figure discloses a hydraulic brake arrangement 1 for managing the trailer brake system of a trailer. Hydraulic brake arrangement 1 make part of a tractor that can therefore be used in a tractor-trailer assembly.

Hydraulic brake arrangement 1 comprises a trailer brake valve module 2 comprising a trailer brake valve 3 and a control valve 4.

Trailer brake valve 3 is fluidly interposed between a source 5 of pressurized fluid and a discharge 6 and a trailer brake system 10 and is configured to modulate the fluid flow coming from source 5 towards brake system 10 via a control line conduit 8.

Essentially, trailer brake system 10 comprises a control line brake that is always present in trailer realized according to both the national and European "mother" regulation and may comprise a supplementary line brake that is always present in trailer realized according to the European "mother" regulation. Preferably, as known, brakes 10', 10'' are negative brakes, i.e. they are unbraked when a pressure above a predefined threshold is applied thereto.

Brakes 10', 10'' are connectable to the trailer brake arrangement 1 via respective first and second couplers 10a, 10b that can be of any known typology.

Trailer brake valve 3 is preferably a four ways- three position proportional valve configured to allow passage of fluid among source 5, discharge 6 and trailer brake system 10 between a first limit configuration wherein control line conduit 8 is fluidly connected entirely to discharge 6 and a second limit configuration wherein all the flow provided by source 5 is sent to control line conduit 8.

Preferably, trailer brake valve 3 is a hydraulic controlled valve.

Source 5 is fluidly connected to the trailer brake valve 3 via a first conduit 7 and the control valve 4 is fluidly connected upstream to the trailer brake valve 3 via a second conduit 7'. Control valve 4 is configured to modulate the flow coming from second conduit 7' to provide a first control signal S' to the trailer brake valve 3.

In detail, control valve 4 is an electro-actuated valve by a first input signal X' and is fluidly interposed between second conduit 7' and discharge 6 to provide the aforementioned first control signal S'. Accordingly, control valve 4 is a three-ways two positions proportional valve.

Therefore, control valve 4 can assume a first limit position wherein the second conduit 7' is fully connected to the trailer brake valve 3 and a second limit position wherein the first control signal S' is sent to discharge.

Control valve 4 is maintained in a pre-set position by retaining means 9, such as spring means, in the aforementioned second limit position.

The hydraulic brake arrangement 1 further comprises a further source of fluid 11 fluidly connected by a supplementary feeding conduit 12 to the supplementary brake 10''. In particular, such further source of fluid 11 has a value that is comprised within a pre-set value defined by the mother regulation requirements.

In detail, hydraulic brake arrangement 1 comprises a safety valve 13 fluidly interposed on the supplementary feeding conduit 12 and configured to allow fluidic communication between the further source 11 and the supplementary brake 10'' or to connect the supplementary brake 10" to discharge 6.

Accordingly, safety valve 13 is a three-ways two positions valve.

Therefore, safety valve 13 can assume a first position wherein the further source 11 of fluid is connected to the supplementary brake 10'' and a second position wherein the supplementary brake 10'' is sent to discharge.

In detail, safety valve 13 is actuated by a second hydraulic signal S'' taken from the control line conduit 8 upstream to control brake 10'.

Safety valve 13 is maintained in a pre-set position by retaining means 14, such as spring means, in the aforementioned second limit position.

In detail, safety valve 13 can be further actuated by a second input signal X'', i.e. an electric control signal, acting in parallel to the second hydraulic signal S".

Safety valve 13 can be further actuated by a third hydraulic signal S‴ acting in parallel to the retaining means 14. Such third hydraulic signal S‴ is taken by master hydraulic cylinders 20 of the tractor, i.e. by pedal pushed by the driver.

The hydraulic brake arrangement 1 further comprises a fourth hydraulic signal Sʺʺ provided from the third hydraulic signal S‴ and configured to act in parallel to the first hydraulic signal S' to the trailer brake valve 3.

In detail, hydraulic brake arrangement 1 comprises a selection valve 21 configured to provide the fourth hydraulic signal Sʺʺ from the third hydraulic signal S‴ towards the trailer brake valve 3.

In particular, selection valve 21 is fluidly interposed on the conduit carrying the fourth hydraulic signal Sʺʺ and is a three-ways two positions valve.

Therefore, selection valve 21 can assume a first position wherein fourth hydraulic signal Sʺʺ is provided from the third hydraulic signal S‴ and a second position wherein the fourth hydraulic signal Sʺʺ is sent to discharge 6.

In detail, selection valve 21 is actuated by a third input signal X‴. Selection valve 21 is maintained in a pre-set position by retaining means 22, such as spring means, in the aforementioned second position.

Hydraulic brake arrangement 1 further comprises a plurality of sensor means 31, 32, 33 configured to detect pressure values in some conduits of the hydraulic brake arrangement 1 to control the operation of valves 4, 13 and 21.

The hydraulic brake arrangement 1 further comprises an electronic control unit (not shown) that comprises elaboration means connected to sensor means 31, 32, 33 configured to elaborate the data retrieved by sensor means and by other inputs coming from the driver or other operative systems of the vehicle to control the valves 4, 13, 21.

Examples of the other inputs coming from the driver or other operative systems can be a parking brake lever signal and/or the coupling status of the first and second couplers 10a, 10b to the respective brakes 10', 10", such as the connection of the supplementary brake 10" to the respective coupler, etc.

In detail, hydraulic brake arrangement 1 comprises first sensor means 31 configured to detect the pressure in control line conduit 8.

The value detected by first sensor means 31 can be used by the electronic control unit to control the operation of control valve 4. Furthermore, if the trailer can communicate the typology of trailer brake system 10 to the electronic control unit, the electronic control unit can take into account the specific of such typology, memorized therein, to control said control valve 4. In particular, with typology it is intended the compliance with specific national standards as CUNA standard.

Hydraulic brake arrangement 1 can further comprise second sensor means 32 configured to detect the pressure of the third hydraulic signal S'''.

Advantageously, hydraulic brake arrangement 1 can further comprise third sensor means 33 configured to detect the pressure of the fourth hydraulic signal Sʺʺ**.**

The value detected by second sensor means 32 and optionally data detected by third sensor means 33 can be used by the electronic control unit to control the operation of control valve 4.

In further detail, the third input signal X‴ controlling selection valve 21 may be elaborated on the base of a signal indicating the typology (mother regulation/dual line trailer or single line/CUNA trailer) connected to the tractor. Such signal can be acquired by sensor means/switch carried by the couplers that allows connection of the trailer brake system 10 to the tractor. In detail, second input signal X‴ is controlled to act against retaining means 22 when a single line/CUNA trailer is connected to the tractor.

The operation of the embodiment of the invention as described above is the following.

If a dual line/mother regulation trailer is coupled to the tractor, both control brake 10' and supplementary brake 10" are coupled via couplers to the hydraulic brake arrangement 1. Accordingly, the user may control via pedal 2 the third hydraulic signal S‴ towards the trailer brake valve 3. In such case, the second input signal X'' does not act against retaining means 22 and therefore the fourth hydraulic signal Sʺʺ can be provided to control hydraulically the trailer brake valve 3 that regulate the passage of flow towards the control brake 10' via control line conduit 8. Since a pressure is present in such conduit, valve 13 is pushed against retaining means 14 thereby allowing also fluid connection of the further source 11 of fluid to supplementary brake 10'.

If a single line/CUNA trailer is coupled to the tractor, only control brake 10' is present. Accordingly, the user may control via pedal 2 the third hydraulic signal S‴ towards the trailer brake valve 3. In such case, the second input signal X" acts against retaining means 22 and therefore the fourth hydraulic signal Sʺʺ is sent to discharge 6. Then the control valve 4 is controlled via third hydraulic control signal S‴ (detected by second and, if present, third sensor means 32, 33) and by data provided by first sensor means 31 to send the first hydraulic control signal S' to trailer brake valve 3 modulating the fluid coming from source 5 towards the control brake 10' via control line conduit 8. In such case, the further source 11 is fluidly connected to safety valve 13 that is controlled by the pressure of the fluid acting in the control line conduit 8 and/or by first input signal X'.

In view of the above, it is evident that the present invention further related to a method for controlling a hydraulic brake arrangement as described and comprising the following steps:
i) detecting the coupling of the supplementary brake 10' to the second coupler 10b;
ii) if at step i) it is detected that no supplementary brake 10'' is coupled to the second coupler 10b, then control said selection valve 21 to send to discharge 6 the fourth hydraulic signal Sʺʺ and control the trailer brake valve 3 via control valve 4;
iii) if at step i) it is detected that the supplementary brake 10" is coupled to second coupler 10b, then control selection valve 21 to allow communication of fourth hydraulic signal Sʺʺ to the trailer brake valve 3 to control this latter.

In view of the foregoing, the advantages of a hydraulic arrangement, a tractor and a tractor-trailer assembly and the related control method according to the invention are apparent.

Thanks to the proposed hydraulic arrangement it is possible to control both a trailer provided with a single line/CUNA architecture or a dual-line/mother regulation architecture.

In particular, the proposed solution is compact and requires small modification to existing hydraulic arrangement therefore can be also applied to existing tractors.

In particular, it is possible to provide the unbraking pressure level required by CUNA to unbrake trailer, and to manage command discharge to tank of control line when required by system condition, without impact by pressure of channel S‴ on trailer vale 4 piloting head.

Furthermore, the optional presence of additional control signals and sensor means allows to provide a hydraulic arrangement that is particularly redundant and therefore safer to failures.

In detail, the electric control of the single-line tractor allows to control different typologies of single-line tractors with the same hydraulic arrangement.

It is clear that modifications can be made to the described hydraulic arrangement, tractor and tractor-trailer assembly and related control method which do not extend beyond the scope of protection defined by the claims.

Clearly, in general, hydraulic topology may be varied and other hydraulic elements that have not been described for sake of brevity can be present.

The second control signal can be substituted by equivalent hydraulic or mechanic actuation for the selection valve 21.

The first control signal may be present, for redundancy, or absent. Similarly, the second and third sensor means can be both present for redundancy or at least one of them.

## Claims

1. Hydraulic brake arrangement (1) for a tractor brake system configured to allow the hydraulic connection to a trailer brake system (10), said trailer brake system (10) comprising either a control brake (10') connectable to said hydraulic brake arrangement (1) by a first coupler (10a) or comprising a control brake (10') and a supplementary brake (10") both connectable to said hydraulic brake arrangement (1) by respective first and second couplers (10a, 10b), said hydraulic brake arrangement (1) comprising a control line (8) and a supplementary line (12) fluidly connected to a source (5, 11) of fluid in pressure of said tractor and to said first and second couplers (10a, 10b),
said hydraulic brake arrangement (1) comprising trailer brake valve module (2) provided with a trailer brake valve (3) configured to modulate the fluid coming from a first source (5) of fluid towards said control line (8), said trailer brake valve (3) being controlled by a fourth hydraulic signal Sʺʺ),
said trailer brake valve module (2) further comprising a control valve (4) fluidly interposed between said first source (5) and said trailer brake valve (3), said control valve (4) being configured to modulate the flow coming from said source (P) to generate a first hydraulic signal (S') to control said trailer brake valve (3) in parallel to said fourth hydraulic signal (Sʺʺ),
said hydraulic brake arrangement (1) comprising a selection valve (21) configured to either allow communication of said fourth hydraulic signal (Sʺʺ) towards said trailer brake valve (3) or to send such fourth hydraulic signal (Sʺʺ) to a discharge (6) thereby allowing the control of said trailer brake valve (3) solely by said control valve (4) via said first hydraulic signal (S').

2. Hydraulic brake arrangement according to claim 1, wherein said trailer brake valve (3) is a proportional valve.

3. Hydraulic brake arrangement according to claim 1 or 2, wherein said fourth hydraulic signal (Sʺʺ) is derived by a third hydraulic signal (S‴) generated by master brake cylinders (20) of said tractor.

4. Hydraulic brake arrangement according to any of the preceding claims wherein said control valve (4) is electro-actuated and controlled by a first control signal (X').

5. Hydraulic brake arrangement according to any of the preceding claims, wherein said control valve (4) is a proportional valve.

6. Hydraulic brake arrangement according to any of the preceding claims wherein said selection valve (21) is controlled by a third control signal (X‴).

7. Hydraulic brake arrangement according to claim 6, wherein said third control signal (X‴) is function of the coupling of a supplementary brake (10'') to the second coupler (10b).

8. Hydraulic brake arrangement according to any of the preceding claims, wherein said selection valve (21) is an electro-actuated valve.

9. Hydraulic brake arrangement according to claims 4 or 8, further comprising sensor means (31, 32, 33) and an electronic control unit comprising elaboration means and electrically connected to said sensor means (31, 32, 33) and configured to elaborate the data acquired by these latter and by other operative systems of said vehicle to generate said first and third control signals (X', X‴).

10. Hydraulic brake arrangement according to claim 9, wherein said sensor means (31, 32, 33) comprises pressure sensor means configured to detect at least one among the pressure in said control line (8), the pressure of said fourth hydraulic signal (S'''') and/or the pressure of said third hydraulic signal (S‴).

11. Hydraulic brake arrangement according to claim 9 or 10, wherein said other operative systems of said vehicle comprise at least the coupling status of said couplers (10a, 10b) to said control and supplementary brakes (10', 10") and/or the activation of a parking lever of said tractor.

12. Hydraulic brake arrangement according to any of claims 9 to 11, wherein said first control signal (X') is elaborated on the base of the data related to the pressure of said third hydraulic signal (S‴).

13. Hydraulic brake arrangement according to any of claims 9 to 12, wherein said third control signal (X‴) is elaborated on the base of the data related to coupling of said supplementary brake (10'') to said second coupler (10b).

14. Hydraulic brake arrangement according to any of the preceding claims, further comprising a second source (11) of fluid fluidly connected to said supplementary line (12) to said second coupler (10b).

15. Hydraulic brake arrangement to claim 14, further comprising a safety valve (13) fluidly interposed on said supplementary line (12) and configured to allow the fluid communication between said source (11) and said second coupler (10b) according to the pressure status in said control line (8).

16. Hydraulic brake arrangement according to claim 15 when depending on claim 3, wherein said safety valve (13) is controlled by a second hydraulic signal (S") provided by said control line (8) and by said third hydraulic signal (S‴) acting against said second hydraulic signal (S").

17. Hydraulic brake arrangement according to claim 16, wherein said safety valve (13) is further controlled by a second input signal (X'') acting in parallel to said second hydraulic signal (S").

18. Method for controlling a hydraulic brake arrangement according to any of the preceding claims depending on claims 9, comprising the following steps:
i) detecting the coupling of said supplementary brake (10") to said second coupler (10b); **characterised in that**
ii) if at step i) it is detected that no supplementary brake (10") is coupled to said second coupler (10b), then control said selection valve (21) to send to discharge (6) said fourth hydraulic signal (Sʺʺ) and control said trailer brake valve (3) via said control valve (4);
iii) if at step i) it is detected that the supplementary brake (10") is coupled to said second coupler (10b), then control said selection valve (21) to allow communication of said fourth hydraulic signal (Sʺʺ) to said trailer brake valve (3) to control this latter.

19. Tractor comprising a hydraulic brake arrangement (1) according to any of the claims 1 to 17.

20. Tractor-trailer assembly comprising a tractor according to claim 19.

## Patentansprüche

1. Hydraulische Bremsanordnung (1) für ein Zugmaschinenbremssystem, das konfiguriert ist, um die hydraulische Verbindung mit einem Anhängerbremssystem (10) zu ermöglichen, wobei das Anhängerbremssystem (10) entweder eine Steuerbremse (10') umfasst, die durch einen ersten Koppler (10a) mit der hydraulischen Bremsanordnung (1) verbindbar ist, oder eine Steuerbremse (10') und eine Zusatzbremse (10") umfasst, die beide durch einen jeweiligen ersten und zweiten Koppler (10a, 10b) mit der hydraulischen Bremsanordnung (1) verbindbar sind, wobei die hydraulische Bremsanordnung (1) eine Steuerleitung (8) und eine Zusatzleitung (12) umfasst, die fluidisch mit einer Druckfluidquelle (5, 11) der Zugmaschine und mit dem ersten und zweiten Koppler (10a, 10b) verbunden sind,
wobei die hydraulische Bremsanordnung (1), ein Anhängerbremsventilmodul (2) umfasst, das mit einem Anhängerbremsventil (3) versehen ist, das konfiguriert ist, um das von einer ersten Fluidquelle (5) kommende Fluid in Richtung der Steuerleitung (8) zu modulieren, wobei das Anhängerbremsventil (3) durch ein viertes hydraulisches Signal (Sʺʺ) gesteuert wird,
wobei das Anhängerbremsventilmodul (2) ferner ein Steuerventil (4) umfasst, das fluidisch zwischen der ersten Quelle (5) und dem Anhängerbremsventil (3) angeordnet ist, wobei das Steuerventil (4) konfiguriert ist, um die von der Quelle (P) kommende Strömung zu modulieren, um ein erstes hydraulisches Signal (S') zu erzeugen, um das Anhängerbremsventil (3) parallel zu dem vierten hydraulischen Signal (Sʺʺ) zu steuern,
wobei die hydraulische Bremsanordnung (1) ein Auswahlventil (21) umfasst, das konfiguriert ist, um entweder eine Kommunikation des vierten hydraulischen Signals (Sʺʺ) in Richtung des Anhängerbremsventils (3) zuzulassen oder ein solches viertes hydraulisches Signal (Sʺʺ) an einen Auslass (6) zu senden, wodurch die Steuerung des Anhängerbremsventils (3) ausschließlich durch das Steuerventil (4) über das erste hydraulische Signal (S') ermöglicht wird.

2. Hydraulische Bremsanordnung nach Anspruch 1, wobei das Anhängerbremsventil (3) ein Proportionalventil ist.

3. Hydraulische Bremsanordnung nach Anspruch 1 oder 2, wobei das vierte hydraulische Signal (Sʺʺ) von einem dritten hydraulischen Signal (S‴) abgeleitet wird, das von Hauptbremszylindern (20) der Zugmaschine erzeugt wird.

4. Hydraulische Bremsanordnung nach einem der vorstehenden Ansprüche, wobei das Steuerventil (4) elektrisch betätigt und durch ein erstes Steuersignal (X') gesteuert wird.

5. Hydraulische Bremsanordnung nach einem der vorstehenden Ansprüche, wobei das Steuerventil (4) ein Proportionalventil ist.

6. Hydraulische Bremsanordnung nach einem der vorstehenden Ansprüche, wobei das Auswahlventil (21) durch ein drittes Steuersignal (X‴) gesteuert wird.

7. Hydraulische Bremsanordnung nach Anspruch 6, wobei das dritte Steuersignal (X‴) eine Funktion der Kopplung einer Zusatzbremse (10") mit dem zweiten Koppler (10b) ist.

8. Hydraulische Bremsanordnung nach einem der vorstehenden Ansprüche, wobei das Auswahlventil (21) ein elektrobetätigtes Ventil ist.

9. Hydraulische Bremsanordnung nach Anspruch 4 oder 8, ferner umfassend ein Sensormittel (31, 32, 33) und eine elektronische Steuereinheit, die ein Verarbeitungsmittel umfasst und elektrisch mit dem Sensormittel (31, 32, 33) verbunden ist und konfiguriert ist, um die von letzteren und von anderen Betriebssystemen des Fahrzeugs erfassten Daten zu verarbeiten, um das erste und dritte Steuersignal (X', X‴) zu erzeugen.

10. Hydraulische Bremsanordnung nach Anspruch 9, wobei das Sensormittel (31, 32, 33) ein Drucksensormittel umfasst, das konfiguriert ist, um mindestens einen von dem Druck in der Steuerleitung (8), dem Druck des vierten hydraulischen Signals (Sʺʺ) und/oder dem Druck des dritten hydraulischen Signals (S‴) zu erfassen.

11. Hydraulische Bremsanordnung nach Anspruch 9 oder 10, wobei die anderen Betriebssysteme des Fahrzeugs zumindest den Kupplungszustand der Koppler (10a, 10b) mit den Steuer- und Zusatzbremsen (10', 10") und/oder die Betätigung eines Parkhebels der Zugmaschine umfassen.

12. Hydraulische Bremsanordnung nach einem der Ansprüche 9 bis 11, wobei das erste Steuersignal (X') auf der Grundlage der Daten bezüglich des Drucks des dritten hydraulischen Signals (S‴) gebildet wird.

13. Hydraulische Bremsanordnung nach einem der Ansprüche 9 bis 12, wobei das dritte Steuersignal (X‴) auf der Grundlage der Daten bezüglich der Kopplung der Zusatzbremse (10") mit dem zweiten Koppler (10b) gebildet wird.

14. Hydraulische Bremsanordnung nach einem der vorstehenden Ansprüche, ferner umfassend eine zweite Fluidquelle (11), die fluidisch mit der Zusatzleitung (12) zu dem zweiten Koppler (10b) verbunden ist.

15. Hydraulische Bremsanordnung nach Anspruch 14, ferner umfassend ein Sicherheitsventil (13), das fluidisch in der Zusatzleitung (12) zwischengeschaltet und konfiguriert ist, um die Fluidverbindung zwischen der Quelle (11) und dem zweiten Koppler (10b) gemäß dem Druckzustand in der Steuerleitung (8) zu ermöglichen.

16. Hydraulische Bremsanordnung nach Anspruch 15 in Abhängigkeit von Anspruch 3, wobei das Sicherheitsventil (13) durch ein von der Steuerleitung (8) bereitgestelltes zweites hydraulisches Signal (S") und durch das dritte hydraulische Signal (S‴), das gegen das zweite hydraulische Signal (S") wirkt, gesteuert wird.

17. Hydraulische Bremsanordnung nach Anspruch 16, wobei das Sicherheitsventil (13) ferner durch ein zweites Eingangssignal (X") gesteuert wird, das parallel zu dem zweiten hydraulischen Signal (S") wirkt.

18. Verfahren zum Steuern einer hydraulischen Bremsanordnung nach einem der vorstehenden Ansprüche, abhängig von Anspruch 9, umfassend die folgenden Schritte:
i) Erfassen der Kopplung der Zusatzbremse (10") mit dem zweiten Koppler (10b); **gekennzeichnet durch**
ii) wenn in Schritt i) erfasst wird, dass keine Zusatzbremse (10") an den zweiten Koppler (10b) gekoppelt ist, dann Steuern des Auswahlventils (21), um das vierte hydraulische Signal (Sʺʺ) an den Auslass (6) zu senden, und Steuern des Anhängerbremsventils (3) über das Steuerventil (4);
iii) wenn in Schritt i) erfasst wird, dass die Zusatzbremse (10") an den zweiten Koppler (10b) gekoppelt ist, dann Steuern des besagten Auswahlventils (21), um die Kommunikation des vierten hydraulischen Signals (Sʺʺ) an das Anhängerbremsventil (3) zu ermöglichen, um letzteres zu steuern.

19. Zugmaschine, umfassend eine hydraulische Bremsanordnung (1) nach einem der Ansprüche 1 bis 17.

20. Zugmaschinen-Anhänger-Anordnung, umfassend eine Zugmaschine nach Anspruch 19.

## Revendications

1. Agencement de freinage hydraulique (1) pour un système de freinage de tracteur configuré pour permettre le raccordement hydraulique à un système de freinage de remorque (10), ledit système de freinage de remorque (10) comprenant soit un frein de commande (10') pouvant être raccordé audit agencement de freinage hydraulique (1) par un premier coupleur (10a), soit comprenant un frein de commande (10') et un frein supplémentaire (10") tous deux pouvant être raccordés audit agencement de freinage hydraulique (1) par des premier et second coupleurs (10a, 10b) respectifs, ledit agencement de freinage hydraulique (1) comprenant une conduite de commande (8) et une conduite supplémentaire (12) raccordée fluidiquement à une source (5, 11) de fluide sous pression dudit tracteur et auxdits premier et second coupleurs (10a, 10b),
ledit agencement de freinage hydraulique (1) comprenant un module de soupape de frein de remorque (2) pourvu d'une soupape de frein de remorque (3) conçue pour moduler le fluide provenant d'une première source (5) de fluide vers ladite conduite de commande (8), ladite soupape de frein de remorque (3) étant commandée par un quatrième signal hydraulique (Sʺʺ),
ledit module de soupape de frein de remorque (2) comprenant en outre une soupape de commande (4) interposée fluidiquement entre ladite première source (5) et ladite soupape de frein de remorque (3), ladite soupape de commande (4) étant conçue pour moduler l'écoulement provenant de ladite source (P) afin de générer un premier signal hydraulique (S') pour commander ladite soupape de frein de remorque (3) parallèlement audit quatrième signal hydraulique (Sʺʺ),
ledit agencement de freinage hydraulique (1) comprenant une soupape de sélection (21) conçue soit pour permettre la communication dudit quatrième signal hydraulique (Sʺʺ) vers ladite soupape de frein de remorque (3), soit pour envoyer ce quatrième signal hydraulique (Sʺʺ) à une décharge (6), permettant de ce fait la commande de ladite soupape de frein de remorque (3) uniquement par ladite soupape de commande (4) par le biais dudit premier signal hydraulique (S').

2. Agencement de freinage hydraulique selon la revendication 1, dans lequel ladite soupape de frein de remorque (3) est une soupape proportionnelle.

3. Agencement de freinage hydraulique selon la revendication 1 ou 2, dans lequel ledit quatrième signal hydraulique (Sʺʺ) est dérivé d'un troisième signal hydraulique (S‴) généré par les maîtres-cylindres de frein (20) dudit tracteur.

4. Agencement de freinage hydraulique selon l'une quelconque des revendications précédentes, dans lequel ladite soupape de commande (4) est électro-actionnée et commandée par un premier signal de commande (X').

5. Agencement de freinage hydraulique selon l'une quelconque des revendications précédentes, dans lequel ladite soupape de commande (4) est une soupape proportionnelle.

6. Agencement de freinage hydraulique selon l'une quelconque des revendications précédentes, dans lequel ladite soupape de sélection (21) est commandée par un troisième signal de commande (X‴).

7. Agencement de freinage hydraulique selon la revendication 6, dans lequel ledit troisième signal de commande (X‴) est fonction de l'accouplement d'un frein supplémentaire (10'') au second coupleur (10b).

8. Agencement de freinage hydraulique selon l'une quelconque des revendications précédentes, dans lequel ladite soupape de sélection (21) est une soupape électro-actionnée.

9. Agencement de freinage hydraulique selon les revendications 4 ou 8, comprenant en outre des moyens de capteur (31, 32, 33) et une unité de commande électronique comprenant des moyens d'élaboration et raccordée électriquement auxdits moyens de capteur (31, 32, 33) et configurée pour élaborer les données acquises par ces derniers et par d'autres systèmes opérationnels dudit véhicule pour générer lesdits premier et troisième signaux de commande (X', X‴)*.*

10. Agencement de freinage hydraulique selon la revendication 9, dans lequel lesdits moyens de capteur (31, 32, 33) comprennent un moyen capteur de pression configuré pour détecter au moins l'un parmi la pression dans ladite conduite de commande (8), la pression dudit quatrième signal hydraulique (Sʺʺ) et/ou la pression dudit troisième signal hydraulique (S‴).

11. Agencement de freinage hydraulique selon la revendication 9 ou 10, dans lequel lesdits autres systèmes opérationnels dudit véhicule comprennent au moins l'état d'accouplement desdits coupleurs (10a, 10b) auxdits freins de commande et supplémentaire (10', 10") et/ou l'activation d'un levier de stationnement dudit tracteur.

12. Agencement de freinage hydraulique selon l'une quelconque des revendications 9 à 11, dans lequel ledit premier signal de commande (X') est élaboré sur la base des données relatives à la pression dudit troisième signal hydraulique (S‴).

13. Agencement de freinage hydraulique selon l'une quelconque des revendications 9 à 12, dans lequel ledit troisième signal de commande (X‴) est élaboré sur la base des données relatives à l'accouplement dudit frein supplémentaire (10'') audit second coupleur (10b).

14. Agencement de freinage hydraulique selon l'une quelconque des revendications précédentes, comprenant en outre une seconde source (11) de fluide raccordée fluidiquement à ladite conduite supplémentaire (12) audit second coupleur (10b).

15. Agencement de freinage hydraulique selon la revendication 14, comprenant en outre une soupape de sécurité (13) interposée fluidiquement sur ladite conduite supplémentaire (12) et conçue pour permettre la communication fluidique entre ladite source (11) et ledit second coupleur (10b) selon l'état de pression dans ladite conduite de commande (8).

16. Agencement de freinage hydraulique selon la revendication 15 lorsqu'elle dépend de la revendication 3, dans lequel ladite soupape de sécurité (13) est commandée par un second signal hydraulique (S") fourni par ladite conduite de commande (8) et par ledit troisième signal hydraulique (S‴) agissant contre ledit deuxième signal hydraulique (S'').

17. Agencement de freinage hydraulique selon la revendication 16, dans lequel ladite soupape de sécurité (13) est en outre commandée par un deuxième signal d'entrée (X'') agissant en parallèle audit second signal hydraulique (S'').

18. Procédé pour la commande d'un agencement de freinage hydraulique selon l'une quelconque des revendications précédentes dépendant de la revendication 9, comprenant les étapes suivantes :
i)détection de l'accouplement dudit frein supplémentaire (10'') audit second coupleur (10b) ; **caractérisé en ce que**
ii) si à l'étape i) il est détecté qu'aucun frein supplémentaire (10'') n'est accouplé audit second coupleur (10b), ladite soupape de sélection (21) est alors commandée pour envoyer à la décharge (6) ledit quatrième signal hydraulique (Sʺʺ) et ladite soupape de frein de remorque (3) est commandée par le biais de ladite soupape de commande (4) ;
iii) si à l'étape i) il est détecté que le frein supplémentaire (10'') est accouplé audit second coupleur (10b), ladite soupape de sélection (21) est alors commandée pour permettre la communication dudit quatrième signal hydraulique (Sʺʺ) à ladite soupape de frein de remorque (3) afin de commander cette dernière.

19. Tracteur comprenant un agencement de freinage hydraulique (1) selon l'une quelconque des revendications 1 à 17.

20. Ensemble tracteur-remorque comprenant un tracteur selon la revendication 19.
